# EUROPÄISCHE PATENTSCHRIFT

(11) **EP 2 001 634 B1**
(45) Veröffentlichungstag und Bekanntmachung des Hinweises auf die Patenterteilung: **03.06.2009**
(21) Anmeldenummer: 07710827.2
(22) Anmeldetag: 03.04.2007
(51) Int. Cl.: B23Q 39/04

(54) **VORRICHTUNG UND VERFAHREN ZUR MATERIALBELADUNG AN EINER RUNDTAKTMASCHINE**
DEVICE AND METHOD FOR MATERIAL CHARGING ON A ROTARY INDEXING MACHINE
DISPOSITIF ET PROCÉDÉ POUR CHARGER UN MATÉRIAU DANS UNE MACHINE À TRANSFERT ROTATIF

(30) Priorität: 05.04.2006 CH 5682006
(43) Veröffentlichungstag der Anmeldung: 17.12.2008
(73) Patentinhaber: Imoberdorf Holding AG, 4702 Oensingen (CH)
(72) Erfinder: BARBETTA, Attila, CH-3367 Thörigen (CH); IMOBERDORF, Anton, CH-4703 Kestenholz (CH)
(74) Vertreter: Ullrich, Gerhard
(86) Internationale Anmeldenummer: PCT/CH2007/000169
(87) Internationale Veröffentlichungsnummer: WO 2007/112611

(56) Entgegenhaltungen:
- DE-U1- 29 814 891
- US-A1- 2002 129 685

## Beschreibung

### Anwendungsgebiet der Erfindung

Die vorliegende Erfindung betrifft eine Vorrichtung und ein Verfahren zur Materialbeladung an einer Rundtaktmaschine, entsprechend den Oberbegriffen der Ansprüche 1 und 6, wie Z.B. aus der US 2002/129685 bekannt.

### Stand der Technik

Herkömmlich erfolgt die Zuführung von Rohmaterial an eine Rundtaktmaschine durch eine oder mehrere extern angeordnete Stangenlader zu den auf dem Transfertisch positionierten Spannvorrichtungen, wobei diese mit einem von einer Stange abgetrennten Werkstückabschnitt beschickt werden. Bei Produkten mit dem Erfordernis einer hohen Oberflächengüte ist der Werkstückabschnitt mit einem Überstand zu dimensionieren, welcher für das Spannen in der Spannvorrichtung benutzt wird, um am eigentlichen Werkstück Quetschspuren zu vermeiden. Nach abgeschlossener Bearbeitung wird der Überstand vom fertigen Werkstück abgetrennt und die frei gewordene Spannvorrichtung mit einem neuen Werkstückabschnitt versorgt. Diese Praxis verursacht einen zusätzlichen Arbeitsgang und erhöht den Materialverbrauch.

### Aufgabe der Erfindung

Zur Überwindung der vom vorbekannten Stand der Technik bestehenden Nachteile, liegt der Erfindung die Aufgabe zugrunde, durch konstruktive Massnahmen und Verfahrensabläufe die Effizienz hinsichtlich Zeit- und Materialaufwand an Rundtaktmaschinen zu verbessern.

### Übersicht über die Erfindung

Die Vorrichtung zur Materialbeladung an einer Rundtaktmaschine beruht auf einem Transfertisch, an dessen Peripherie eine Vielzahl von Spannvorrichtungen zur Aufnahme der zu bearbeitenden Werkstücke angeordnet ist. Ausserhalb des Transfertisches befinden sich stationäre Bearbeitungseinheiten, an welche die Spannvorrichtungen im Umlauf taktweise herangeführt werden. Vorhanden ist eine externe Stangenzufuhr zur Beladung der Rundtaktmaschine von einer Materialstange ausgehend, vorzugsweise in Gestalt eines Stangenladers. Auf dem Transfertisch sind auf die Spannvorrichtungen gerichtete Stangenträger positioniert, um darin Teilstangen von der vielfachen Länge eines Werkstücks aufzunehmen. Eine Vorschubeinheit dient für das Nachführen einer nächsten Werkstücklänge von der Teilstange in die Spannvorrichtung als der Bearbeitungseinheit zuzuführendem Frontabschnitt.

Die nachfolgenden Merkmale beziehen sich auf spezielle Ausführungen der Erfindung: Die Stangenträger sind radial vom Zentrum des Transfertisches auf die jeweilige Spanneinrichtung angeordnet. Der Stangenträger hat eine Führung, die z.B. als Nut gestaltet ist. Zwischen der Spannvorrichtung und dem Stangenträger ist ein Freiraum vorgesehen, welcher von der zwischen der Spannvorrichtung und dem Stangenträger geführten Teilstange durchragt wird, die sich nach Abtrennen fertig bearbeiteter Frontabschnitte sukzessive in eine zunehmend verkürzte Teilstange reduziert. Dieser Freiraum erlaubt den Zugriff der Zange der Vorschubeinheit.

Die Beladung der Stangenträger mit ganzen Teilstangen erfolgt von zumindest einer Position aus, an der vorzugsweise eine Trennmaschine zum Abteilen der ganzen Teilstangen von der Materialstange stationiert ist. Die Vorschubeinheit ist zum Austreiben oder Herausziehen der verkürzten Teilstange aus dem Stangenträger bestimmt. Am zum Zentrum des Transfertischs gerichteten Ende der Stangenträger ist ein Anschlag zur Begrenzung der Einschubtiefe der Materialstange vorhanden. Der Trennmaschine ist ein mechanischer Stangenlader mit einem Magazin bevorrateter Materialstangen zugeordnet.

Das Verfahren zur Materialbeladung einer Rundtaktmaschine besteht im wesentlichen aus folgenden Schritten:
1. Vorausgesetzt wird, dass an einem Transfertisch, an dessen Peripherie eine Vielzahl von Spannvorrichtungen zur Aufnahme der zu bearbeitenden Werkstücke angeordnet ist;
2. Ausserhalb des Transfertisches gibt es stationäre Bearbeitungseinheiten, an welche die Spannvorrichtungen im Umlauf taktweise herangeführt werden.
3. Vorhanden ist eine externe Stangenzufuhr zur Beladung der Rundtaktmaschine von einer Materialstange, vorzugsweise in Gestalt eines Stangenladers.
4. Von zumindest einer Position werden Teilstangen in auf dem Transfertisch positionierten Stangenträgern geladen.
5. Ein mit der Teilstange verbundener und aus der Spannvorrichtung herausragender Frontabschnitt wird bei taktweise drehendem Transfertisch den Bearbeitungseinheiten zugeführt.
6. Der zumindest im Prinzip fertig bearbeitete Frontabschnitt wird an einer Station der Rundtaktmaschine von der zunächst ganzen Teilstange und im weiteren von der sich zunehmend verkürzenden Teilstange abgetrennt.
7. Hiernach wird die ganze Teilstange bzw. die verkürzte Teilstange um einen weiteren Frontabschnitt von einer Vorschubeinheit radial aus den Stangenträgern in die Spannvorrichtungen in Richtung der Bearbeitungseinheiten bewegt.
8. Nach dem vollständigen Verbrauch der verkürzten Teilstange erfolgt ein Nachladen mit der nächsten ganzen Teilstange.

Beim Nachladen der internen Stangenträgern fährt das auf das Zentrum des Transfertischs zufahrende Ende der Materialstange gegen einen Anschlag, worauf die Trennmaschine eine ganze Teilstange abschneidet. Die Vorschubeinheit wirkt auf die im Stangenträger geführte ganze Teilstange bzw. verkürzte Teilstange ausstossend und/oder ausziehend.

### Kurzbeschreibung der beigefügten Zeichnungen

Es zeigen:

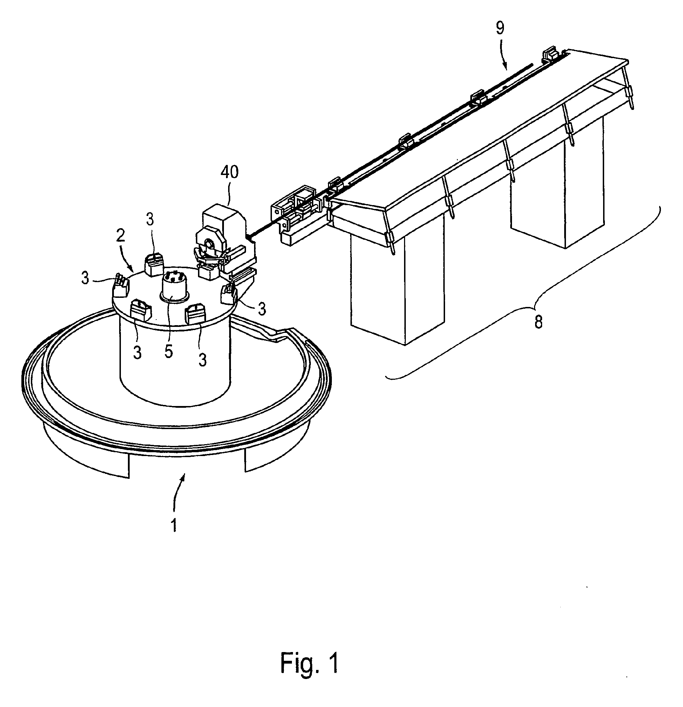

- Figur 1 -: das Fundament einer Rundtaktmaschine mit dem im Zentrum angeordneten Transfertisch, den in dessen Peripherie positionierten Spannvorrichtungen und einem externen Stangenlader, in Perspektivansicht;

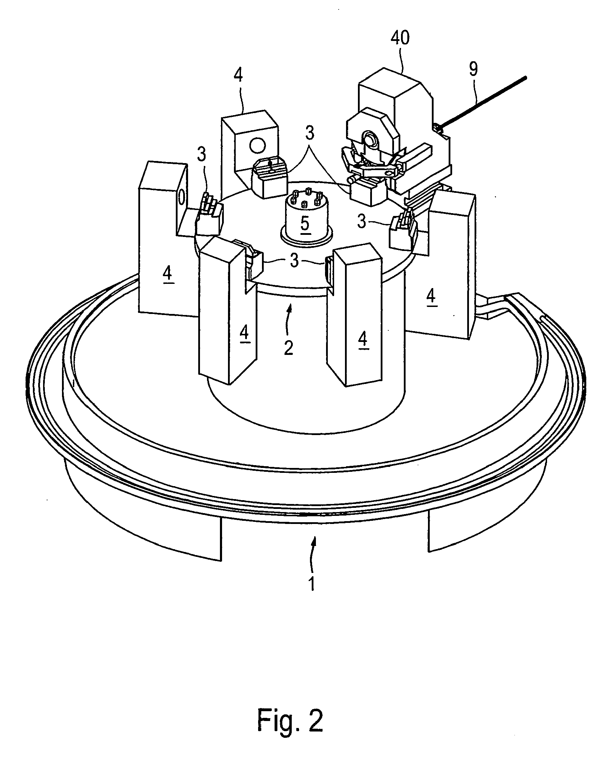

- Figur 2 -: das Fundament und den Transfertisch aus Figur 1 mit den den Spannvorrichtungen zugeordneten Bearbeitungseinheiten, in Perspektivansicht;

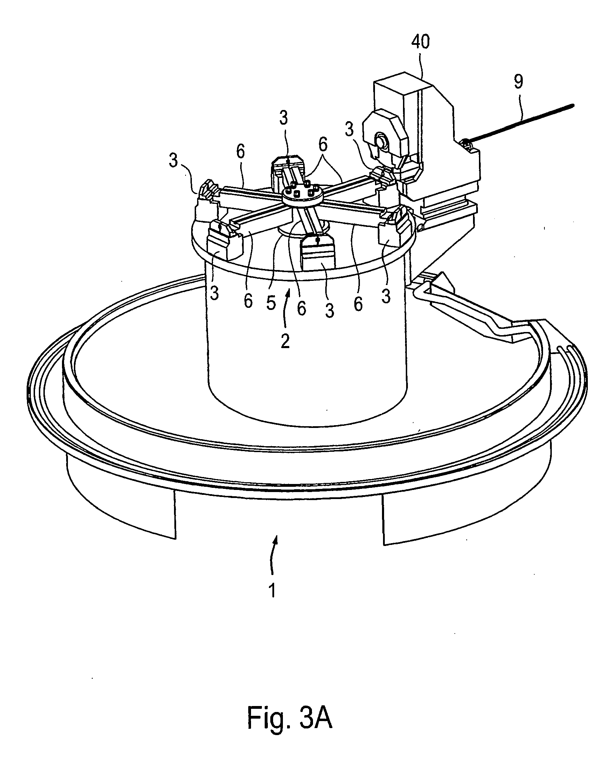

- Figur 3A -: das Fundament und den Transfertisch mit Spannvorrichtungen aus Figur 1 und auf dem Transfertisch fixierten Stangenträgern, in Perspektivansicht;

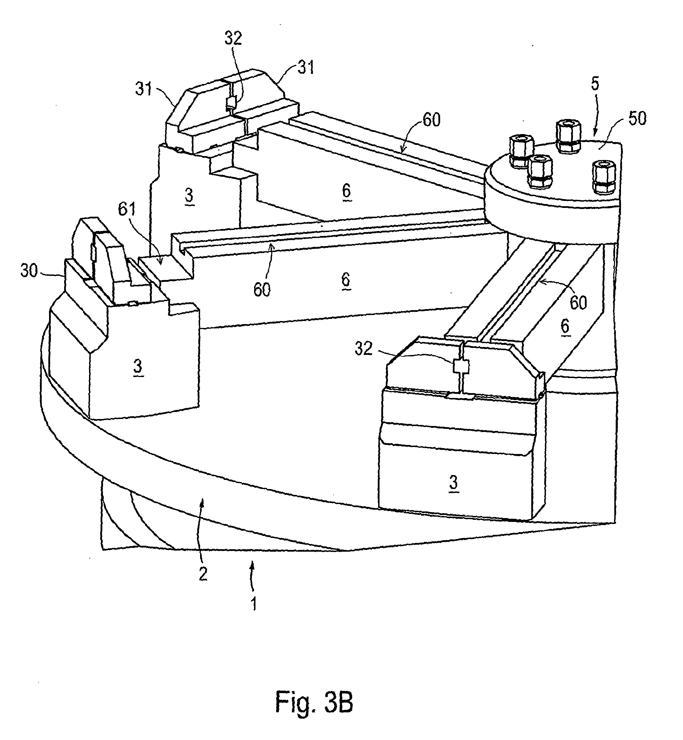

- Figur 3B -: einen vergrösserten Ausschnitt des Aufbaus auf dem Transfertisch gemäss Figur 3A, mit zunächst leeren Stangenträgem;

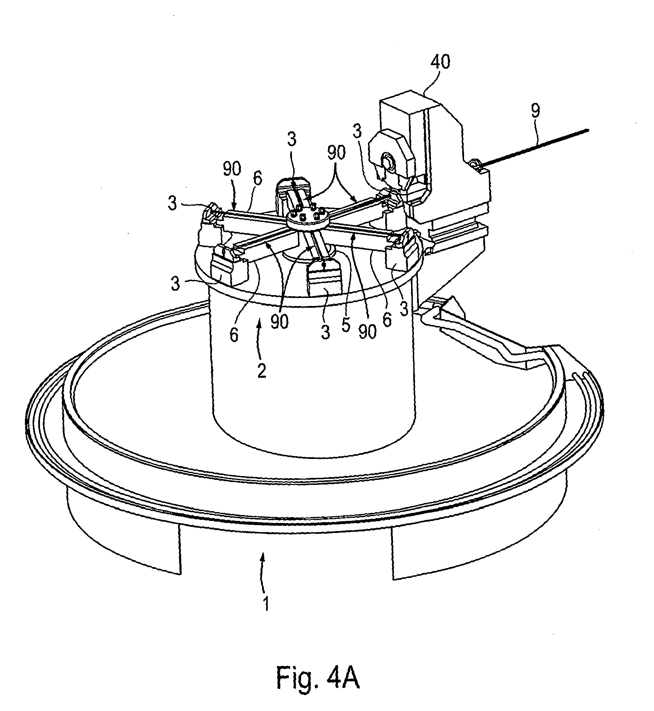

- Figur 4A -: die Anordnung gemäss Figur 3A, jedoch mit ganzen Teilstangen bestückt, in Perspektivansicht;

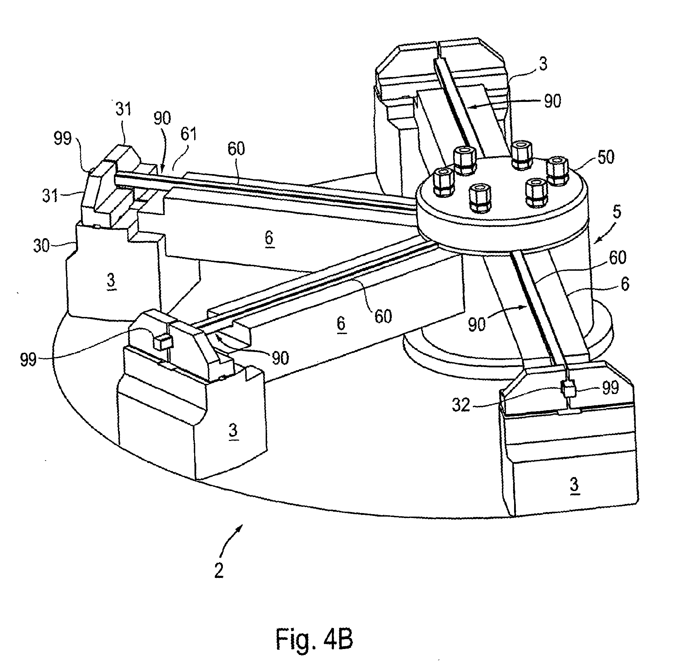

- Figur 4B -: einen vergrösserten Ausschnitt des Aufbaus auf dem Transfertisch gemäss Figur 4A, mit ganzen Teilstangen;

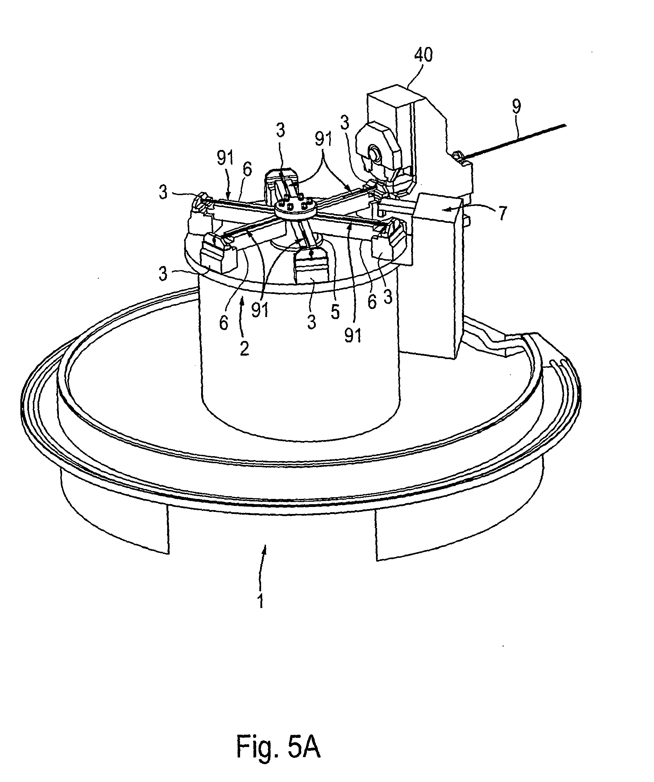

- Figur 5A -: die Anordnung gemäss Figur 4A, mit verkürzten Teilstangen bestückt und einer Vorschubeinheit, in Perspektivansicht;

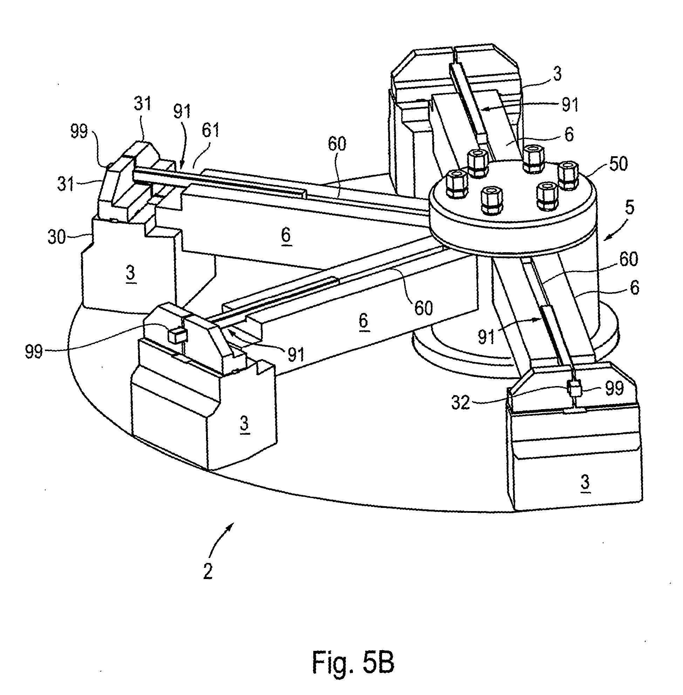

- Figur 5B -: einen vergrösserten Ausschnitt des Aufbaus auf dem Transfertisch gemäss Figur 5A, mit verkürzten Teilstangen, ausserhalb des Bereichs der Vorschubeinheit;

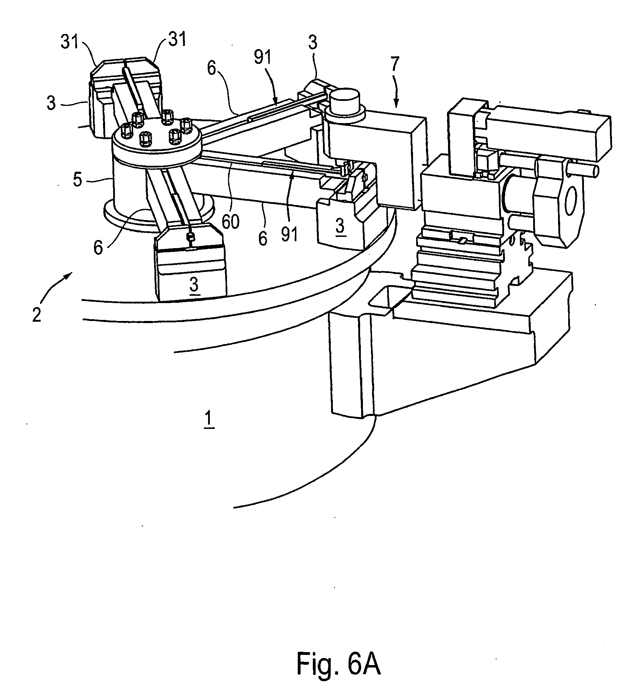

- Figur 6A -: einen vergrösserten Ausschnitt des Aufbaus auf dem Transfertisch gemäss Figur 5A, mit verkürzten Teilstangen, im Bereich der Vorschubeinheit, in Perspektivansicht; und

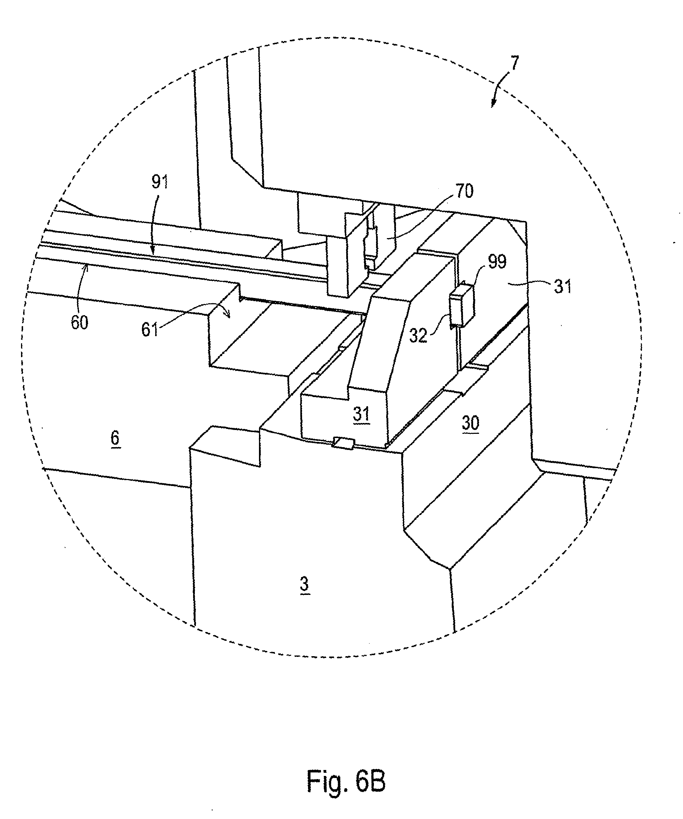

- Figur 6B -: einen nochmals vergrösserten Ausschnitt im Bereich der Zange der Vorschubeinheit, nahe einer Spannvorrichtung, ausser Eingriff mit der verkürzten Teilstange, in Perspektivansicht.

### Ausführungsbeispiel

Anhand der beiliegenden Zeichnungen erfolgt nachstehend die detaillierte Beschreibung eines Ausführungsbeispiels der erfindungsgemässen Vorrichtung zur Materialbeladung an einer Rundtaktmaschine. Ferner wird das Verfahren zur Materialbeladung mit seinen prinzipiellen Schritten dargestellt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1 und 2

Die dargestellte herkömmliche Rundtaktmaschine **1** ruht auf einem Fundament und hat in der Mitte einen Transfertisch **2** mit darauf peripher angeordneten Spannvorrichtungen **3,** welche mit Material beschickt werden, das mit einer Trennmaschine **40** von einer Materialstange **9** abgeteilt wird, welche von einem Stangenlader **8** kommt. In der Mitte auf dem Transfertisch **2** ist üblich eine Zentrumssäule **5** positioniert, in der Versorgungsleitungen einmünden. Die Spannvorrichtungen **3** werden durch den drehenden Transfertisch **2** taktweise an die stationär angeordneten Bearbeitungseinheiten **4** herangeführt.

### Figuren 3A und 3B

Dieses Figurenpaar veranschaulicht die auf dem Transfertisch **2** zwischen der Zentrumssäule **5** und den Spannvorrichtungen **3** in radialer Anordnung positionierten Stangenträger **6,** welche gegenwärtig leer sind. Die Stangenträger **6** besitzen an ihrer Oberfläche eine Führung **60,** die als Nut ausgebildet ist. Nahe den auf einer Basis **30** platzierten Spannbacken **31** und der dazwischen liegenden Öffnung **32** der Spannvorrichtung **3** hat der Stangenträger **6** einen Freiraum **61.** Die inneren Enden der Stangenträger **6** werden von einem auf der Zentrumssäule **5** sitzenden Flansch **50** fixiert.

### Figuren 4A und 4B

In dieser Situation sind die Führungen **60** an den Stangenträgern **6** mit ganzen Teilstangen **90** belegt, die den Freiraum **61** und die Öffnung **31** zwischen den Spannbacken **31** durchragen. Ein Frontabschnitt **99** vorn an der Teilstange **90** ragt aus der Spannvorrichtung **3** als an den Bearbeitungseinheiten **4** im Takt zu bearbeitender Werkstückabschnitt heraus. Momentan haben die Teilstangen **90** noch ihre maximale Länge d.h. es wurde noch kein fertig bearbeiteter Frontabschnitt **99** abgetrennt.

### Figuren 5A bis 6B

In diesem Zustand liegen nur mehr verkürzte Teilstangen **91** in den Führungen **60,** da bereits eine Anzahl fertig bearbeiteter Frontabschnitte **99** abgetrennt wurde, woraus die zunehmende Längenreduktion der ursprünglichen ganzen Teilstangen **90** resultiert. Für das Nachführen der ganzen Teilstangen **90** bzw. der verkürzten Teilstangen **91** ist an der Rundtaktmaschine **1** eine Vorschubeinheit **7** aufgestellt, deren Zange **70** die verkürzte Teilstange **91** im Freiraum **61** erfasst und in die jetzt geöffnete Spannvorrichtung **3** vorschiebt, so dass ein weiterer Frontabschnitt **99** zur beginnenden Bearbeitung bereit steht.

## Patentansprüche

1. Vorrichtung zur Materialbeladung an einer Rundtaktmaschine **(1)** mit:
a) einem Transfertisch **(2),** an dessen Peripherie eine Vielzahl von Spannvorrichtungen **(3)** zur Aufnahme der zu bearbeitenden Werkstücke angeordnet ist;
b) ausserhalb des Transfertisches **(2)** stationären Bearbeitungseinheiten **(4),** an welche die Spannvorrichtungen **(3)** im Umlauf taktweise herangeführt werden; und
c) einer externen Stangenzufuhr **(8)** zur Beladung der Rundtaktmaschine (1) von einer Materialstange **(9),** vorzugsweise in Gestalt eines Stangenladers **(8), dadurch gekennzeichnet, dass**
d) auf dem Transfertisch **(2)** auf die Spannvorrichtungen **(3)** gerichtete Stangenträger **(6)** positioniert sind, um darin Teilstangen **(90)** von der vielfachen Länge eines Werkstücks aufzunehmen; und
e) einer Vorschubeinheit **(7)** für das Nachführen einer nächsten Werkstücklänge von der Teilstange **(90)** in die Spannvorrichtung **(3)** als der Bearbeitungseinheit **(4)** zuzuführendem Frontabschnitt **(99).**

2. Vorrichtung nach Anspruch 1, **dadurch gekennzeichnet, dass**
a) die Stangenträger **(6)** radial vom Zentrum des Transfertisches **(2)** auf die jeweilige Spanneinrichtung **(3)** angeordnet sind; und
b) der Stangenträger **(6)** eine Führung **(60)** hat, die z.B. als Nut gestaltet ist.

3. Vorrichtung nach einem der Ansprüche 1 und 2, **dadurch gekennzeichnet, dass**
a) zwischen der Spannvorrichtung **(3)** und dem Stangenträger **(6)** ein Freiraum **(61)** vorgesehen ist, welcher von der zwischen der Spannvorrichtung **(3)** und dem Stangenträger **(6)** geführten Teilstange **(90)** durchragt wird, die sich nach Abtrennen fertig bearbeiteter Frontabschnitte **(99)** sukzessive in eine zunehmend verkürzte Teilstange **(91)** reduziert; und
b) dieser Freiraum **(61)** den Zugriff der Zange **(70)** der Vorschubeinheit **(7)** erlaubt.

4. Vorrichtung nach einem der Ansprüche 1 bis 3, **dadurch gekennzeichnet, dass**
a) die Beladung der Stangenträger **(6)** mit ganzen Teilstangen **(90)** von zumindest einer Position aus erfolgt, an der vorzugsweise eine Trennmaschine **(40)** zum Abteilen der ganzen Teilstangen **(90)** von der Materialstange **(9)** stationiert ist; und
b) die Vorschubeinheit **(7)** zum Austreiben oder Herausziehen der verkürzten Teilstange **(91)** aus dem Stangenträger **(6)** bestimmt ist.

5. Vorrichtung nach einem der Ansprüche 1 bis 4, **dadurch gekennzeichnet, dass**
a) am zum Zentrum des Transfertisches **(2)** gerichteten Ende der Stangenträger **(6)** ein Anschlag zur Begrenzung der Einschubtiefe der Materialstange **(9)** vorhanden ist; und
b) der Trennmaschine **(40)** ein mechanischer Stangenlader **(8)** mit einem Magazin bevorrateter Materialstangen **(9)** zugeordnet ist.

6. Verfahren zur Materialbeladung einer Rundtaktmaschine **(1),** mit:
a) einem Transfertisch **(2),** an dessen Peripherie eine Vielzahl von Spannvorrichtungen **(3)** zur Aufnahme der zu bearbeitenden Werkstücke angeordnet ist;
b) ausserhalb des Transfertisches **(2)** stationären Bearbeitungseinheiten **(4),** an welche die Spannvorrichtungen **(3)** im Umlauf taktweise herangeführt werden; und
c) einer externen Stangenzufuhr **(8)** zur Beladung der Rundtaktmaschine **(1)** von einer Materialstange **(9),** vorzugsweise in Gestalt eines Stangenladers **(8), dadurch gekennzeichnet, dass**
d) von zumindest einer Position Teilstangen **(90)** in auf dem Transfertisch **(2)** positionierten Stangenträgern **(6)** geladen werden;
e) ein mit der Teilstange **(90)** verbundener und aus der Spannvorrichtung **(3)** herausragender Frontabschnitt **(99)** bei taktweise drehendem Transfertisch **(2)** den Bearbeitungseinheiten **(4)** zugeführt wird;
f) der im wesentlichen fertig bearbeitete Frontabschnitt **(99)** an einer Station der Rundtaktmaschine (1) von der zunächst ganzen Teilstange **(90)** und im weiteren von der sich zunehmend verkürzenden Teilstange **(91)** abgetrennt wird;
g) hiernach die ganze Teilstange **(90)** bzw. die verkürzte Teilstange **(91)** um einen weiteren Frontabschnitt **(99)** von einer Vorschubeinheit **(7)** radial aus den Stangenträgern **(6)** in die Spannvorrichtungen **(3)** in Richtung der Bearbeitungseinheiten **(4)** bewegt wird; und
h) nach dem vollständigen Verbrauch der verkürzten Teilstange **(91)** ein Nachladen mit der nächsten ganzen Teilstange **(90)** erfolgt.

7. Verfahren nach Anspruch 6, **dadurch gekennzeichnet, dass**
a) beim Nachladen der internen Stangenträgern **(6)** das auf das Zentrum des Transfertisches **(2)** zufahrende Ende der Materialstange **(9)** gegen einen Anschlag fährt, worauf die Trennmaschine **(4)** eine ganze Teilstange **(90)** abschneidet; und
b) die Vorschubeinheit **(7)** auf die im Stangenträger **(6)** geführte ganze Teilstange **(90)** bzw. verkürzte Teilstange **(91)** auf diese ausstossend und/oder ausziehend wirkt.

## Claims

1. Device for material charging on a rotary indexing machine **(1),** comprising
a) a transfer table **(2),** on the periphery of which a multiplicity of clamping devices **(3)** for accommodating the workpieces to be machined are arranged;
b) stationary machining units **(4)** outside the transfer table **(2),** to which machining units **(4)** the clamping devices **(3)** are advanced cyclically in rotation; and
c) an external bar feed **(8)** for charging the rotary indexing machine **(1)** from a material bar **(9),** preferably in the form of a bar loader **(8), characterized in that**
d) bar carriers **(6)** directed towards the clamping devices **(3)** are positioned on the transfer table **(2)** in order to accommodate therein bar sections **(90)** of the multiple length of a workpiece; and
e) a feed unit **(7)** for feeding a next workpiece length of the bar section **(90)** into the clamping device **(3)** as a front portion **(99)** to be fed to the machining unit **(4).**

2. Device according to Claim 1, **characterized in that**
a) the bar carriers **(6)** are arranged radially from the centre of the transfer table **(2)** towards the respective clamping device **(3);** and
b) the bar carrier **(6)** has a guide **(60)** which is designed, for example, as a groove.

3. Device according to either of Claims 1 and 2, **characterized in that**
a) a free space **(61)** is provided between the clamping device **(3)** and the bar carrier **(6),** and the bar section **(90)** guided between the clamping device **(3)** and the bar carrier **(6)** projects through said free space **(61)** and, after finish-machined front portions **(99)** have been cut off, is successively reduced into an increasingly shortened bar section **(91);** and
b) this free space **(61)** permits access to the pincers **(70)** of the feed unit **(7).**

4. Device according to one of Claims 1 to 3, **characterized in that**
a) the bar carriers **(6)** are charged with complete bar sections **(90)** from at least one position at which preferably a cutting-off machine **(40)** for cutting off the complete bar sections **(90)** from the material bar **(9)** is stationed; and
b) the feed unit **(7)** is intended for driving or pulling the shortened bar section **(91)** out of the bar carrier **(6).**

5. Device according to one of Claims 1 to 4, **characterized in that**
a) there is a stop for limiting the push-in depth of the material bar **(9)** at the end of the bar carriers **(6)** which is directed towards the centre of the transfer table **(2);** and
b) a mechanical bar loader **(8)** having a magazine stocked with material bars **(9)** is assigned to the cutting-off machine **(40).**

6. Method for material charging a rotary indexing machine **(1),** comprising:
a) a transfer table **(2),** on the periphery of which a multiplicity of clamping devices **(3)** for accommodating the workpieces to be machined are arranged;
b) stationary machining units **(4)** outside the transfer table **(2),** to which machining units **(4)** the clamping devices **(3)** are advanced cyclically in rotation; and
c) an external bar feed **(8)** for charging the rotary indexing machine **(1)** from a material bar **(9),** preferably in the form of a bar loader **(8), characterized in that**
d) bar sections **(90)** are loaded from at least one position in bar carriers **(6)** positioned on the transfer table **(2);**
e) a front portion **(99)** connected to the bar section **(90)** and projecting from the clamping device **(3)** is fed to the machining units **(4),** with the transfer table **(2)** rotating cyclically;
f) the essentially finish-machined front portion **(99)** is cut off, at a station of the rotary indexing machine **(1),** from the next complete bar section **(90)** and, in continuation, from the bar section **(91)** becoming increasingly shorter;
g) after that, the complete bar section **(90)** or the shortened bar section **(91)** is moved radially by a further front portion **(99)** from the bar carriers **(6)** in the direction of the machining units **(4)** into the clamping devices **(3)** by means of a feed unit **(7);** and
h) after the shortened bar section **(91)** has been completely used, the next complete bar section **(90)** is subsequently charged.

7. Method according to Claim 6, **characterized in that**
a) during the subsequent charging of the internal bar carriers **(6),** that end of the material bar **(9)** which travels towards the centre of the transfer table **(2)** travels against a stop, whereupon the cutting-off machine **(4)** cuts off a complete bar section **(90);** and
b) the feed unit **(7)** acts on the complete bar section **(90)** or shortened bar section **(91),** guided in the bar carrier **(6),** in such a way as to eject and/or pull out said complete bar section **(90)** or said shortened bar section **(91).**

## Revendications

1. Dispositif pour charger un matériau dans une machine à transfert rotatif **(1),** comprenant:
a) une table de transfert **(2)** sur la périphérie de laquelle est prévue une pluralité de dispositifs de serrage **(3)** pour recevoir les pièces à usiner;
b) à l'extérieur de la table de transfert **(2),** des unités d'usinage stationnaires **(4)** sur lesquelles sont apportés, en circuit à séquence cadencée, les dispositifs de serrage **(3);** et
c) un apport de barres externe **(8)** pour charger la machine à transfert rotatif (1) avec une barre de matériau **(9),** de préférence en forme de chargeur à barres **(8), caractérisé en ce que**
d) sur la table de transfert **(2)** sont positionnés des supports de barre **(6)** orientés vers les dispositifs de serrage **(3),** afin d'y recevoir des barres partielles **(90)** de la longueur multiple d'une pièce; et
e) une unité d'avance **(7)** pour le guidage subséquent d'une longueur suivante de pièce de la barre partielle **(90)** dans le dispositif de serrage **(3)** sert de portion avant **(99)** à acheminer à l'unité d'usinage **(4).**

2. Dispositif selon la revendication 1, **caractérisé en ce que**
a) les supports de barre **(6)** sont disposés radialement depuis le centre de la table de transfert **(2)** sur chaque dispositif de serrage **(3);** et
b) le support de barre **(6)** a un guide **(60)** qui est par exemple configuré sous forme de rainure.

3. Dispositif selon l'une quelconque des revendications 1 et 2, **caractérisé en ce que**
a) l'on prévoit entre le dispositif de serrage **(3)** et le support de barre **(6)** un espace libre **(61),** qui est traversé par la barre partielle **(90)** guidée entre le dispositif de serrage **(3)** et le support de barre **(6),** laquelle barre partielle est successivement réduite en une barre partielle **(91)** de plus en plus courte après le sectionnement de portions avant **(99)** usinées finies; et
b) cet espace libre **(61)** permet l'accès à la pince **(70)** de l'unité d'avance **(7).**

4. Dispositif selon l'une quelconque des revendications 1 à 3, **caractérisé en ce que**
a) le chargement des supports de barre **(6)** s'effectue avec des barres partielles complètes **(90)** depuis au moins une position, à laquelle est installée de préférence une machine de coupe **(40)** pour diviser les barres partielles complètes **(90)** de la barre de matériau **(9);** et
b) l'unité d'avance **(7)** est prévue pour expulser ou extraire les barres partielles raccourcies **(91)** hors du support de barre **(6).**

5. Dispositif selon l'une quelconque des revendications 1 à 4, **caractérisé en ce que**
a) à l'extrémité des supports de barre **(6)** orientée vers le centre de la table de transfert **(2)** est prévue une butée pour limiter la profondeur d'enfoncement de la barre de matériau **(9);** et
b) un chargeur à barres **(8)** mécanique avec un magasin de barres de matériau **(9)** pré-stockées est associé à la machine de coupe **(40).**

6. Procédé pour charger un matériau dans une machine à transfert rotatif (1), comprenant:
a) une table de transfert **(2)** sur la périphérie de laquelle est prévue une pluralité de dispositifs de serrage **(3)** pour recevoir les pièces à usiner;
b) à l'extérieur de la table de transfert **(2),** des unités d'usinage stationnaires **(4)** sur lesquelles sont apportés, en circuit à séquence cadencée, les dispositifs de serrage **(3);** et
c) un apport de barres externe **(8)** pour charger la machine à transfert rotatif **(1)** avec une barre de matériau **(9),** de préférence en forme de chargeur à barres **(8), caractérisé en ce que**
d) des barres partielles **(90)** sont chargées depuis au moins une position, dans des supports de barres **(6)** positionnés sur la table de transfert **(2);**
e) une portion avant **(99)** connectée à la barre partielle **(90)** et faisant saillie hors du dispositif de serrage **(3)** est acheminée aux unités d'usinage **(4)** lorsque la table de transfert **(2)** tourne de manière cadencée;
f) la portion avant **(99)** essentiellement usinée et finie, au niveau d'un poste de la machine à transfert rotatif **(1)** est séparée de la barre partielle d'abord complète **(90)** et est ensuite séparée de la barre partielle **(91)** se raccourcissant de plus en plus;
g) ensuite, la barre partielle complète **(90)** ou la barre partielle raccourcie **(91)** est déplacée d'une autre portion frontale **(99)** par une unité d'avance **(7)** radialement depuis les supports de barre **(6)** dans les dispositifs de serrage (3) dans la direction des unités d'usinage **(4);** et
h) après la consommation totale de la barre partielle raccourcie **(91),** on effectue un rechargement avec la barre partielle complète suivante **(90).**

7. Procédé selon la revendication 6, **caractérisé en ce que**
a) après le rechargement des supports de barre internes **(6),** l'extrémité de la barre de matériau **(9)** avançant vers le centre de la table de transfert **(2)** est amenée contre une butée, puis la machine de coupe **(4)** sectionne une barre partielle complète **(90);** et
b) l'unité d'avance **(7)** agit sur la barre partielle complète **(90)** ou raccourcie **(91)** guidée dans le support de barre **(6)** pour l'expulser et/ou l'extraire.
